# EUROPEAN PATENT APPLICATION

(11) **EP 4 629 739 A1**
(43) Date of publication of application: **08.10.2025**
(21) Application number: 25167660.7
(22) Date of filing: 01.04.2025
(51) Int. Cl.: H04W 76/10, H04W 8/12, H04W 88/14

(54) **METHOD AND APPARATUS FOR SERVING GATEWAY USER PLANE AND INTERMEDIATE USER PLANE SELECTION BASED ON APN/DNN AND ROAMING STATUS OF THE SUBSCRIBER**

(30) Priority: 01.04.2024 IN 202441027023; 28.03.2025 US 202519093808
(71) Applicant: Mavenir Systems, Inc., Richardson, TX 75081 (US)
(72) Inventor: Gupta, Rohit, 560035 Bangalore Karnataka (IN); Padlikar, Vipin, 560048 Bangalore (IN); Jindal, Tamanna, McKinney, TX 75070 (US)
(74) Representative: dompatent von Kreisler Selting Werner - Partnerschaft von Patent- und Rechtsanwälten mbB

(57) **Abstract**

A System and method for selecting a Serving Gateway User Plane/Intermediate User Plane Function/User Plane Function (SGW-U/I-UPF/UPF) for a mobile device in a visited network node where a roaming or a non-roaming status for the mobile device is determined, an Access Point Name (APN) / Data Network Name (DNN) for the mobile device is determined, where a Serving Gateway Control Plane/Session Management Function (SGW-C/SMF) node selects a first SGW-U/I-UPF/UPF or a second SGW-U/I-UPF/UPF for the mobile device based on the determination of the mobile device being in a roaming or a non-roaming status.

## Description

### BACKGROUND

### 1. Field of the Disclosure

The present disclosure is related to a control system for managing functions in a telecom network. More particularly, the present disclosure is related to a control system and method for managing the selection of a Serving Gateway User Plane (SGW-U) and Intermediate User Plane Function (UPF) in a telecom network.

### 2. Description of Related Art

In an Evolved Packet System (EPS) network, the Serving Gateway Control Plane (SGW-C) is responsible for selecting the Serving Gateway User Plane (SGW-U) for the subscriber's sessions based on the subscriber's current location using, for instance, 4G-Tracking Area Identity (TAI) Information.

In a 5GS network, if the present Packet Data Unit (PDU) Sesson Anchor (PSA) for the PDU session does not serve the current location of the subscriber, the Session Management Function (SMF) is responsible for selecting and inserting the Intermediate User Plane Function (I-UPF) in the path for the subscriber's sessions based on the subscriber's current location (5G-TAI) Information. For a Home-routed session, the SMF in the visited network is also responsible for selecting and inserting a UPF in the visited network for the home-routed sessions. A "Home routed" scenario or session is where user data traffic is routed from the Visited Public Land Mobile Network (VPLMN) to the Home Public Land Mobile Network (HPLMN) before being routed to the Internet or service networks.

There are certain deployments in a visited network (Inbound) where it is preferable to have a separate SGW-U/UPF for: 1) roaming and non-roaming subscribers; and 2) data and voice sessions.

There are benefits to selecting a different SGW-U/UPF for roaming and non-roaming subscribers. In addition to separating roaming from non-roaming traffic, the benefits include: 1) The ability to deploy different capacities for SGW-U/UPF based on the roaming call model for roaming sessions; and 2) The ability to apply different operator-specific roaming policies on the User Plane (UP).

There are benefits to selecting a different SGW-U/UPF/I-UPF for data and voice sessions. In addition to separating data and voice sessions, the benefits include: 1) The ability to deploy different capacities for SGW-U/UPF/I-UPF based on the call model for voice sessions; and 2) Any failure of one type of the UP does not impact both the voice and data sessions as these are separated from each other.

However, a major limitation of current systems is that because the selection of SGW-U/I-UPF/UPF in a visited network is based solely on a current location of the subscriber, in these instances, current systems do not allow to for separate SGW-U/I-UPF/UPF in a visited network for the situations described above.

Accordingly, there is a need for a control scheme that overcomes, alleviates, and/or mitigates one or more of the aforementioned and other deleterious effects of current telecom management systems.

### SUMMARY

Accordingly, it is desired to provide a control system and a method for managing the selection of an SGW-U/I-UPF/UPF in a telecommunication (telecom) network.

It is further desired to provide a system and a method for selecting different SGW-U/UPF for roaming and non-roaming subscribers when a mobile device is in a visited network.

It is still further desired to provide a system and a method for selecting a different SGW-U/UPF for data and voice sessions when a mobile device is in a visited network.

It is also desired to provide a system and a method for the selection of SGW-U/I-UPF/UPF when a mobile device is in a visited network to be based on more than only a current location of the subscriber mobile device.

In one configuration, a system is provided that allows for selecting different SGW-U/I-UPF/UPF for a mobile device in a visited network node by the SGW-C/SMF node based on roaming and non-roaming status of the subscriber and the Access Point Name (APN) / Data Network Name (DNN). An APN is the name of a gateway between a mobile network (GSM, GPRS, 3G, 4G and 5G) and another computer network, such as, the public Internet.

The solution proposes that the SGW-C/SMF node shall be able to select SGW-U/I-UPF/UPF in a visited network node for the subscriber/session based on the roaming status of the subscriber.

For this application the following terms and definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

As used herein, the phrases "at least one,", "one or more," "or,", and "and/or" are openended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B
and
C together, or A, B and C together.

In one embodiment, a method for selecting a Serving Gateway User Plane/Intermediate User Plane Function/User Plane Function (SGW-U/I-UPF/UPF) for a mobile device in a visited network node is provided comprising the steps of: connecting the mobile device to a visited network node, determining a roaming or a non-roaming status for the mobile device, and determining an Access Point Name (APN) / Data Network Name (DNN) for the mobile device. The method further comprises the steps of: providing a Serving Gateway Control Plane/Session Management Function (SGW-C/SMF) node adapted to select a first SGW-U/I-UPF/UPF or a second SGW-U/I-UPF/UPF for the mobile device, wherein the first SGW-U/I-UPF/UPF is different from the second SGW-U/I-UPF/UPF, and selecting either the first SGW-U/I-UPF/UPF or the second SGW-U/I-UPF/UPF based on a determination of the mobile device being in a roaming or a non-roaming status respectively.

The above-described and other features and advantages of the present disclosure will be appreciated and understood by those skilled in the art from the following detailed description, drawings, and appended claims.

### DESCRIPTION OF THE DRAWINGS

FIG. 1 is a block diagram illustrating 3GPP EPS Architecture according to the prior art;
FIG. 2 is a block diagram illustrating 3GPP 5GS Architecture according to the prior art;
FIG. 3 is a block diagram illustrating SGW-U Selection Based on Roaming Status and APN according to one configuration of the invention;
FIG. 4 is a block diagram illustrating I-UPF Selection Based on DNN in a non-roaming scenario according to another configuration of the invention; and
FIG. 5 is a block diagram illustrating I-UPF Selection Based on DNN and Roaming Status in a roaming scenario according to the configuration of FIG. 4.

### DETAILED DESCRIPTION

Referring now to the drawings, wherein like reference numerals designate corresponding structure throughout the views.

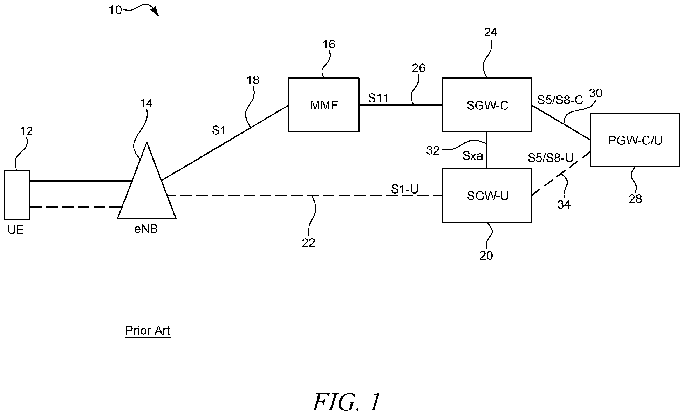

Referring to the drawings, FIG. 1 illustrates a block diagram of a 3GPP EPS system 10 according to the prior art is depicted. In this illustration, User Equipment (UE) 12 is connected to evolved NodeB (eNB) 14. eNB 14 is in turn, connected to Mobility Management Entity (MME) 16 via the S1 connection 18. eNB 14 is further connected to SGW-U 20 via the S1-U connection 22. MME 16 is connected to SGW-C 24 via the S11 connection 26. The SGW-C 24 is connected to PGW-C/U 28 via the S5/S8-C 30 connection. Finally, the SGW-U 20 is connected to SGW-C 24 via the Sxa 32 connection, and SGW-U 20 is connected to PGW-C/U 28 via the S5/S8-U 34 connection.

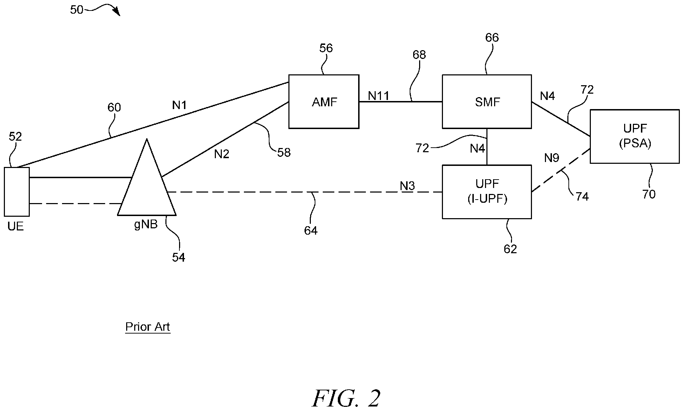

Referring now to FIG. 2, a block diagram of a 3GPP 5GS system 50 according to the prior art is depicted. In this illustration, UE 52 is connected to next generation NodeB (gNB) 54. gNB 54 is in turn, connected to Access and Mobility Management Function (AMF) 56 via the N2 connection 58. Additionally, the UE 52 is connected to AMF 56 via the N1 connection 60. gNB 54 is further connected to UPF / I-UPF 62 via the N3 connection 64. AMF 56 is connected to SMF 66 via the N11 connection 68. The SMF 66 is connected to UPF / PSA 70 via the N4 72 connection. Finally, the UPF / I-UPF 62 is connected to SMF 66 via the N4 connection 72, and UPF / I-UPF 62 is connected to UPF / PSA 70 via the N9 connection 74.

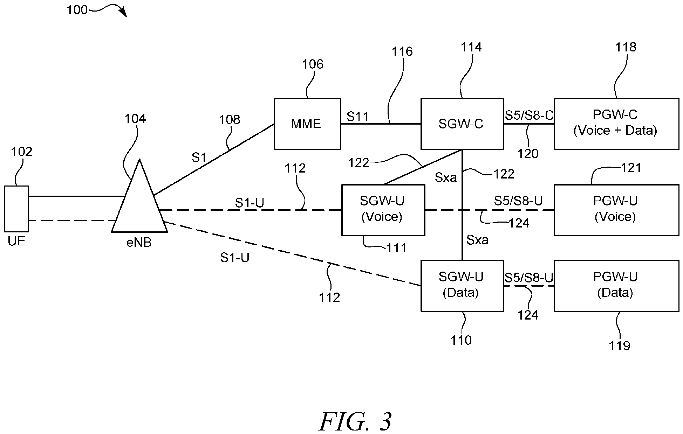

Referring now to FIG. 3, a block diagram of a 3GPP EPS system 100 according to one configuration of the present disclosure is depicted. In this illustration, UE 102 is connected to evolved NodeB (eNB) 104. eNB 104 is in turn, connected to Mobility Management Entity MME 106 via the S1 connection 108. eNB 104 is further connected to SGW-U (Voice) 111 via the S1-U connection 112. eNB 104 is still further connected to SGW-U (Data) 110 via the S1-U connection 112. MME 106 is connected to SGW-C 114 via the S11 connection 116. The SGW-C 114 is connected to PGW-C (Voice/Data) 118 via the S5/S8-C 120 connection. SGW-U (Data) 110 is connected to PGW-U (Data) 119 via the S5/S8-U 124 connection. SGW-U (Data) 110 is connected to SGW-C 114 via the Sxa connection 122. SGW-U (Voice) 111 is connected to PGW-U (Voice) 121 via the S5/S8-U 124 connection. SGW-U (Voice) 111 is connected to SGW-C 114 via the Sxa connection 122.

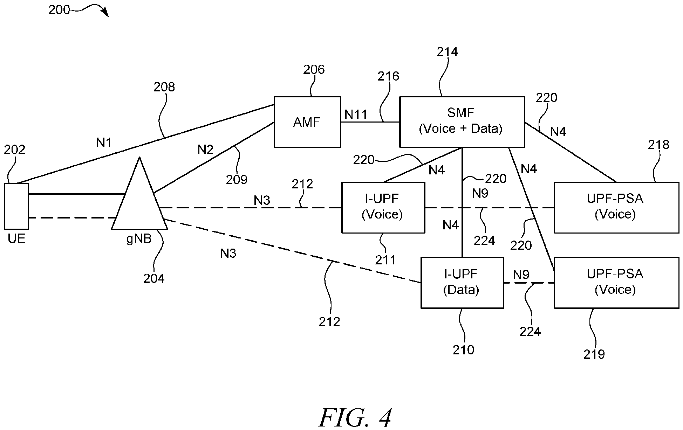

Referring now to FIG. 4, a block diagram of a 3GPP 5GS system 200 illustrating I-UPF selection based on DNN in non-roaming scenario according to another configuration of the invention is depicted. In this configuration, UE 202 is connected to next generation NodeB (gNB) 204. gNB 204 is in turn, connected to Access and Mobility Management Function (AMF) 206 via the N2 connection 209. Additionally, UE 202 is connected to AMF 206 via the N1 connection 208. AMF 206 is connected to SMF (Data + Voice) 214 via the N11 connection 216. SMF (Data + Voice) 214 is connected to UPF / PSA (Voice) 218 via the N4 220 connection. gNB 204 is further connected to I-UPF (Voice) 211 via the N3 connection 212. I-UPF (Voice) 211 is connected to UPF / PSA (Voice) 218 via the N9 connection 224. gNB 204 is further connected to I-UPF (Data) 210 via the N3 connection 212. I-UPF (Data) 210 is connected to UPF / PSA (Data) 219 via the N9 connection 224. SMF (Data + Voice) 214 is connected to UPF / PSA (Data) 219 via the N4 220 connection. I-UPF (Voice) 211 is connected to SMF (Data + Voice) 214 via the N4 220 connection. Finally, the I-UPF (Data) 210 is connected to SMF (Data + Voice) 214 via the N4 220 connection.

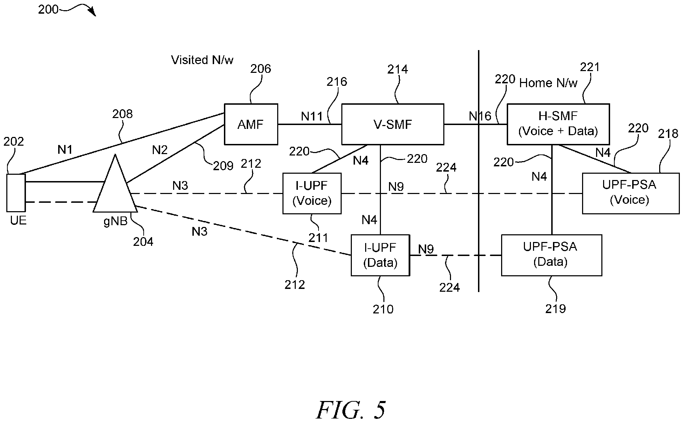

Referring now to FIG. 5, a block diagram of a 3GPP 5GS system 200 illustrating I-UPF selection based on DNN and roaming status in a roaming scenario according to another configuration of the invention is depicted. In this configuration, UE 202 is connected to next generation NodeB (gNB) 204. gNB 204 is in turn, connected to Access and Mobility Management Function (AMF) 206 via the N2 connection 209. Additionally, UE 202 is connected to AMF 206 via the N1 connection 208. AMF 206 is connected to V-SMF 214 via the N11 connection 216. V-SMF 214 is connected to H-SMF (Voice + Data) 221 via the N16 connection 220. H-SMF (Voice + Data) 221 is connected to UPF / PSA (Voice) 218 via the N4 connection 220. gNB 204 is further connected to I-UPF (Voice) 211 via the N3 connection 212. I-UPF (Voice) 211 is connected to UPF / PSA (Voice) 218 via the N9 connection 224. gNB 204 is further connected to I-UPF (Data) 210 via the N3 connection 212. I-UPF (Data) 210 is connected to UPF / PSA (Data) 219 via the N9 connection 224. I-UPF (Voice) 211 is connected to V-SMF 214 via the N4 220 connection. I-UPF (Data) 210 is connected to V-SMF 214 via the N4 220 connection. Finally, UPF / PSA (Data) 219 is connected to H-SMF (Voice + Data) 221 via the N4 220 connection.

The SGW-C considers the roaming status of the subscriber as follows:

Roaming Status - Home: SGW-C compares the Public Land Mobile Network ID (PLMNID) derived from both Access Point Name (APN) and International Mobile Subscriber Identity (IMSI) with the configured list of PLMN-IDs on the SGW-C, if both derived PLMN-IDs are the same and matches with an entry in the configured list of PLMN-IDs on SGW-C, the roaming status of the subscriber is considered as a Home.

Roaming Status - Roam (Home-Routed): SGW-C compares the PLMNID derived from both APN and IMSI with the configured list of PLMN-IDs on the SGW-C, if both derived PLMN-IDs are the same but doesn't match with an entry in the configured list of PLMN-IDs on SGW-C, the roaming status of the subscriber is considered as a Roaming.

Roaming Status Visited (Local Breakout): SGW-C compares the PLMNID derived from both APN and IMSI with the configured list of PLMN-IDs on the SGW-C, if both derived PLMN-IDs are different, and the APN PLMN-ID matches with an entry in the configured list of PLMN-IDs on SGW-C, the roaming status of the subscriber is considered as a Visited.

The SMF in the Visited network considers the roaming status of the subscriber as follows:

Roaming Status - Home: SMF compares the PLMNID derived from both Data Network Name (DNN) and Subscription Permanent Identifier (SUPI) with the configured list of PLMN-IDs on the SMF, if both derived PLMN-IDs are same and matches with an entry in the configured list of PLMN-IDs on SMF, the roaming status of the subscriber is considered as a Home.

Roaming Status - Roam (Home-Routed): SMF compares the PLMNID derived from both DNN and SUPI with the configured list of PLMN-IDs on the SMF, if both derived PLMN-IDs are the same but doesn't match with an entry in the configured list of PLMN-IDs on SMF, the roaming status of the subscriber can be considered as a Roaming.

Roaming Status Visited (Local Breakout): SMF compares the PLMNID derived from both DNN and SUPI with the configured list of PLMN-IDs on the SMF, if both derived PLMN-IDs are different, and the DNN PLMN-ID matches with an entry in the configured list of PLMN-IDs on SMF, the roaming status of the subscriber is considered as a Visited.

APN/DNN name received from the Serving node for Public Data Network/Packet Data Unit (PDN/PDU) Session Establishment.

Current Location received from the Serving Node.

The SGW-U/I-UPF/UPF (in visited network) configuration can be implementation specific, example: local configuration at SGW-C/SMF or in Network Repository Function (NRF).

The following reference examples can be used to understand the solution.

**Table 1**

| **Session Type** | **APN/DNN Received** | **Selection Criteria** | **Selected SGW-U/I-UPF/UPF(in the visited network)** |
|---|---|---|---|
| Home Subscriber for Data Session | abc | APN/DNN- abc + RoamingStatus - Home + Location- TAI Received | Home-Data |
| Home Subscriber for IMS Session | ims | APN/DNN- ims + RoamingStatus - Home + Location- TAI Received | Home-IMS |
| Inbound Roamer for IMS Session | Ims | APN/DNN- ims + RoamingStatus - Roam + Location- TAI Received | Roam-IMS |
| Inbound Roamer for Data Session | abc | APN/DNN- abc + RoamingStatus - Roam + Location- TAI Received | Roam-Data |

While the present disclosure has been described with reference to one or more exemplary embodiments, it will be understood by those skilled in the art that various changes can be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method for selecting a Serving Gateway User Plane/Intermediate User Plane Function/User Plane Function (SGW-U/I-UPF/UPF) for a mobile device in a visited network node comprising the steps of:
connecting the mobile device to a visited network node;
determining a roaming or a non-roaming status for the mobile device;
determining an Access Point Name (APN) / Data Network Name (DNN) for the mobile device;
providing a Serving Gateway Control Plane/Session Management Function (SGW-C/SMF) node adapted to select a first SGW-U/I-UPF/UPF or a second SGW-U/I-UPF/UPF for the mobile device, wherein the first SGW-U/I-UPF/UPF is different from the second SGW-U/I-UPF/UPF; and
selecting either the first SGW-U/I-UPF/UPF or the second SGW-U/I-UPF/UPF based on a determination of the mobile device being in a roaming or a non-roaming status respectively.

2. The method according to claim 1, wherein the step of selecting either the first SGW-U/I-UPF/UPF or the second SGW-U/I-UPF/UPF based on a determination of the mobile device being in a roaming or a non-roaming status respectively further comprises,
selecting the first SGW-U/I-UPF/UPF or the second SGW-U/I-UPF/UPF based on the APN/DNN for the mobile device.

3. The method according to claim 2, wherein the visited network node comprises an evolved NodeB (eNB) that is connected to a Mobility Management Entity (MME), which is in turn connected to a Serving Gateway Control Plane (SGW-C).

4. The method according to claim 3, further comprising the steps of:
connecting the SGW-C to a Serving Gateway User Plane (SGW-U) for voice, and
connecting the SGW-C to a SGW-U for data.

5. The method according to claim 4, wherein the SGW-C is further connected to a Public Data Network (PDN) Gateway Control plane (PGW-C), the method further comprising the steps of:
connecting the SGW-U for voice to a PDN Gateway User plane (PGW-C) for voice; and
connecting the SGW-U for data to a PGW-C for data.

6. The method according to claim 2, wherein the visited network node comprises a next generation NodeB (gNB) that is connected to an Access and Mobility Management Function (AMF).

7. The method according to claim 6, wherein the AMF is further connected to a Sesson Management Function (SMF).

8. The method according to claim 7, further comprising the steps of:
connecting the SMF to an Intermediate User Plane Function (I-UPF) for voice, and
connecting the SMF to an I-UPF for data.

9. The method according to claim 8, wherein the SMF is further connected to a UPF Packet Data Unit Sesson Anchor (UPF-PSA) for voice and an UPF-PSA for data, the method further comprising the steps of:
connecting the I-UPF for voice to the UPF-PSA for voice; and
connecting the I-UPF for data to the UPF-PSA for data.

10. The method according to claim 8, wherein the SMF comprises a Visited SMF (V-SMF).

11. The method according to claim 10, wherein the V-SMF is further connected to a Home SMF (H-SMF), the method further comprising the steps of:
connecting the H-SMF to a UPF Packet Data Unit Sesson Anchor (UPF-PSA) for voice; and
connecting the H-SMF to a UPF-PSA for data.

12. The method according to claim 2, wherein the SGW-C determines roaming status of a subscriber as follows:
the SGW-C compares a Public Land Mobile Network ID (PLMNID) derived from both an Access Point Name (APN) and an International Mobile Subscriber Identity (IMSI) with a configured list of PLMN-IDs on the SGW-C, wherein,
if both derived PLMN-IDs are the same and match with an entry in the configured list, the roaming status of the subscriber is considered as Home on the SGW-C,
if both derived PLMN-IDs are the same but do not match with an entry in the configured list, the roaming status of the subscriber is considered as Roaming on the SGW-C, or
if both derived PLMN-IDs are different, and the APN PLMN-ID matches with an entry in the configured list, the roaming status of the subscriber is considered as Visited on the SGW-C.

13. The method according to claim 12, wherein the SMF in a Visited network determines a roaming status of the subscriber as follows:
the SMF compares the PLMNID derived from both Data Network Name (DNN) and Subscription Permanent Identifier (SUPI) with a configured list of PLMN-IDs on the SMF, wherein,
if both derived PLMN-IDs are the same and matches with an entry in the configured list of PLMN-IDs on the SMF, the roaming status of the subscriber is considered as Home on the SMF,
if both derived PLMN-IDs are the same but do not match with an entry in the configured list of PLMN-IDs on SMF, the roaming status of the subscriber is considered as Roaming on the SMF, or
if both derived PLMN-IDs are different, and the DNN PLMN-ID matches with an entry in the configured list of PLMN-IDs on SMF, the roaming status of the subscriber is considered as Visited on the SMF.
